# EUROPEAN PATENT APPLICATION

(11) **EP 4 501 712 A1**
(43) Date of publication of application: **05.02.2025**
(21) Application number: 23811542.2
(22) Date of filing: 25.04.2023
(51) Int. Cl.: B60R 11/06, E02F 9/00

(54) **WORK VEHICLE**

(30) Priority: 26.05.2022 JP 2022085982
(71) Applicant: Hitachi Construction Machinery Co., Ltd., Tokyo 110-0015 (JP)
(72) Inventor: IWAKI, Kenshiro, Tsuchiura-shi, Ibaraki 300-0013 (JP); MORI, Yasuo, Tsuchiura-shi, Ibaraki 300-0013 (JP); NGUYEN, DinhToan, Tsuchiura-shi, Ibaraki 300-0013 (JP)
(74) Representative: Manitz Finsterwald Patent- und Rechtsanwaltspartnerschaft mbB
(86) International application number: PCT/JP2023/016274
(87) International publication number: WO 2023/228664

(57) **Abstract**

In a wheel loader 1 with a housing box 3, the housing box 3 is formed into a box shape including a bottom surface portion 301, a top surface portion 302, a first side surface portion 303 connecting the bottom surface portion 301 and the top surface portion 302, and a second side surface portion 304 connecting the bottom surface portion 301, the top surface portion 302, and the first side surface portion 303, each of the top surface portion 302, the first side surface portion 303, and the second side surface portion consists of the main body 31 and the cover 32, the top surface potion 302 includes an inclined region 302B inclined downward from a horizontal region 302A toward the second side surface portion 304, and a draw latch 33 for locking the cover 32 to the main body 31 is provided on the inclined region 302B.

## Description

### TECHNICAL FIELD

The present invention relates to a wheeled work vehicle with a housing body for housing an onboard tool, equipment, and the like which is mounted to a side portion of a vehicle body.

### BACKGROUND ART

In a work vehicle, onboard tools to be used in a maintenance work, equipment for regular replacement, and the like are housed in a housing box which is a box-shaped housing body, and in many cases, this housing box is provided on a side portion of a vehicle body where an operator can easily access from the ground.

For example, Patent Literature 1 discloses a wheel loader with a substantially rectangular parallelepiped battery box for housing a battery, and this battery box is mounted to a lower portion of the side of a rear part of a vehicle body and in front of a counterweight. The battery box is provided with an inspection window allowing the liquid level of the battery or the like to be inspected, which extends from a top surface to a side surface, and on the inspection window, an inspection window cover for preventing rainwater, dust, or the like from entering is mounted so as to be openable and closable in the upward and downward direction. The inspection window cover is lockable to the side surface of the battery box using a fastener (fastening device) with the inspection window being closed.

### CITATION LIST

### PATENT LITERATURE

Patent Literature 1: JP-A-2012-183943

### SUMMARY OF INVENTION

### TECHNICAL PROBLEM

However, in the wheel loader according to Patent Literature 1, the fastener for locking the inspection window cover of the battery box is mounted to the side surface of the battery box and behind the wheels, and thus, especially when the vehicle body travels forward, the battery box is easily covered with mud splashing from the wheels. If the mud splashing from the wheels adheres to the fastener and hardened with elapse of time, the fastener becomes hard to move, which makes it difficult to open and close the inspection window cover.

For avoiding the influence of mud splashing from the wheels during traveling, the fastener may be mounted to the top surface of the battery box, however, in such a worksite that the sand, dust, and the like easily fly, the sand, dust, and the like are easily deposited on the top surface of the battery box. Accordingly, in this case as well, if the sand, dust, and the like deposited on the fastener are hardened with elapse of time, the fastener becomes hard to move, which makes it difficult to open and close the inspection window cover.

Therefore, an object of the present invention is to provide a work vehicle capable of improving workability in opening and closing a housing body provided on a side portion of a vehicle body.

### SOLUTION TO PROBLEM

In order to achieve the object described above, the present invention provides a work vehicle comprising: a vehicle body; a plurality of wheels provided on the vehicle body; and a housing body mounted to a side portion of the vehicle body and behind one of the plurality of wheels, the housing body including: a main body provided with an opening through which an inside of the main body is accessible; a cover for covering the opening, which is mounted to the main body so as to be openable and closable; and a locking tool for locking the cover to the main body, wherein the housing body is formed into a box shape including: a bottom surface portion; a top surface portion arranged to face the bottom surface portion; a first side surface portion connecting the bottom surface portion and the top surface portion on a side facing the one of the wheels; and a second side surface portion connecting the bottom surface portion, the top surface portion, and the first side surface portion from a lateral side at a position more rearward than the first side surface portion, the top surface portion consists of the main body and the cover, the top surface potion includes: a horizontal region parallel to a ground surface in contact with the vehicle body; and an inclined region inclined downward from the horizontal region toward the second side surface portion, and the locking tool is provided on the inclined region of the top surface portion.

### ADVANTAGEOUS EFFECTS OF INVENTION

According to the present invention, it is possible to improve workability in opening and closing a housing body provided on a side portion of a vehicle body. The problems, structures, and advantageous effects other than those described above will be clarified by explanation of the embodiments below.

### BRIEF DESCRIPTION OF DRAWINGS

[FIG. 1] FIG. 1 is a side view of the appearance illustrating an exemplified structure of a wheel loader according to an embodiment of the present invention.
[FIG. 2] FIG. 2 is a perspective view illustrating a housing box and a peripheral area thereof.
[FIG. 3] FIG. 3 is a side view illustrating a housing box and a peripheral area thereof.
[FIG. 4] FIG. 4 is an enlarged perspective view illustrating exemplified structures of a draw latch and a handle.
[FIG. 5] FIG. 5 is a perspective view illustrating a housing box with its cover being fully opened and the inside thereof.
[FIG. 6] FIG. 6 is a side view illustrating a housing box with its cover being fully opened and the inside thereof.
[FIG. 7] FIG. 7 is a diagram for explaining a relation between an example of a range of mud splash from a rear wheel and a portion of a housing box to which mud easily adheres.
[FIG. 8] FIG. 8 illustrates an example of a positional relation between a housing box and a rear wheel when viewed from a rear side of a vehicle body.
[FIG. 9] FIG. 9 illustrates a positional relation between a housing box and a rear wheel when the rear wheel swings leftward in FIG. 8.
[FIG. 10] FIG. 10 illustrate an example of a case where an orientation of a draw latch illustrated in FIG. 4 is different.
[FIG. 11] FIG. 11 illustrates an example of a case where an orientation of a handle illustrated in FIG. 4 is different.
[FIG. 12] FIG. 12 illustrates a further example of a case where an orientation of a handle illustrated in FIG. 4 is different.

### DESCRIPTION OF EMBODIMENTS

Hereinafter, as one of the aspects of a work vehicle according to embodiments of the present invention, a wheel loader for performing a loading work, in which it excavates such as earth and sand, minerals, and the like and loads them into a loading destination such as a dump truck or a hopper, will be described.

### <Structure of wheel loader 1>

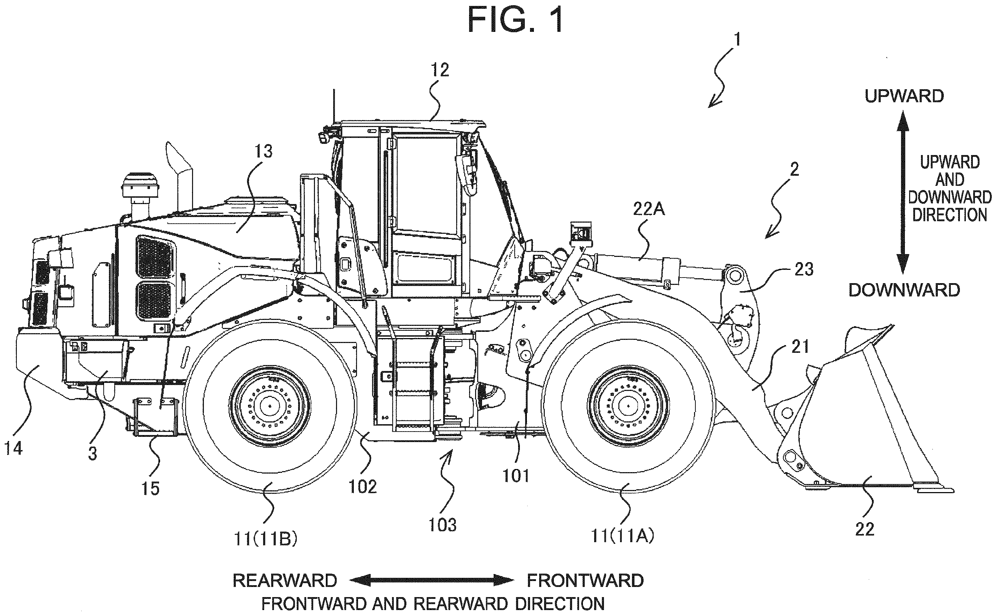

Firstly, the structure of a wheel loader 1 will be described with reference to FIG. 1.

FIG. 1 is a side view of the appearance illustrating an exemplified structure of the wheel loader 1 according to an embodiment of the present invention.

The wheel loader 1 is an articulated work vehicle in which a vehicle body is bent and swiveled on its central portion and steered thereby, and in the wheel loader 1, a front frame 101 serving as the front part of the vehicle body and a rear frame 102 serving as the rear part of the vehicle body are connected with each other via a center joint 103 so as to be swiveled in the left and right direction. The front frame 101 is bent in the left and right direction with respect to the rear frame 102 in accordance with a steering operation.

The vehicle body includes four wheels 11, and the two wheels 11 among them are provided, as front wheels 11A, on both the left and right sides of the front frame 101, respectively, and the remaining two wheels 11 are provided, as rear wheels 11B, on both the left and right sides of the rear frame 102, respectively. FIG. 1 illustrates, among the four wheels 11, only the front wheel 11A and the rear wheel 11B provided on the right side. In the following, in the left and right direction of the vehicle body, the right side direction of an operator who is sitting on an operator's seat and facing forward is referred to as the right side of the vehicle body, and the left side direction of the operator is referred to as the left side of the vehicle body.

On a front portion of the front frame 101, a hydraulically-driven working device 2 is mounted. The working device 2 includes a lift arm 21 mounted to the front frame 101 so as to be rotatable in the upward and downward direction, two lift arm cylinders (not illustrated) for driving the lift arm 21, a bucket 22 mounted to the distal end of the lift arm 21 so as to be rotatable in the upward and downward direction, a bucket cylinder 22A for driving the bucket 22, and a bell crank 23 coupled to the lift arm 21 so as to be rotatable, which serves as a link mechanism between the bucket 22 and the bucket cylinder 22A.

The rear frame 102 is provided with an operator's cab 12 allowing an operator to get in, a machine room 13 for housing various types of equipment necessary for driving the wheel loader 1, and a counterweight 14 for adjusting the weight balance with the working device 2 to prevent the vehicle body from tilting. On the rear frame 102, the operator's cab 12 is arranged in a front portion thereof, the counterweight 14 is arranged in a rear portion thereof, and the machine room 13 is arranged between the operator's cab 12 and the counterweight 14.

On a right side portion of the rear frame 102, a housing box 3 as a housing body capable of housing, for example, an onboard tool and the like is mounted. In the present embodiment, as illustrated in FIG. 1, the housing box 3 is fixed behind the rear wheel 11B provided on the right side, ahead of the counterweight 14, and below the machine room 13.

However, the housing box 3 does not necessarily have to be mounted behind the rear wheel 11B provided on the right side of the vehicle body as long as it is mounted to a side portion of the vehicle body and behind one of the wheels 11. For example, the housing box 3 may be mounted behind the rear wheel 11B at a left side portion of the vehicle body, behind the front wheel 11A (ahead of the rear wheel 11B) at a right side portion of the vehicle body, or the like depending on the specification of the vehicle body, purpose of use of the housing box 3, and the like.

In the present embodiment, as illustrated in FIG. 1, on a right side portion of the rear frame 102, a step 15 to be used by an operator when he or she accesses the machine room 13 is mounted between the rear wheel 11B and the housing box 3.

### <Structure of housing box 3>

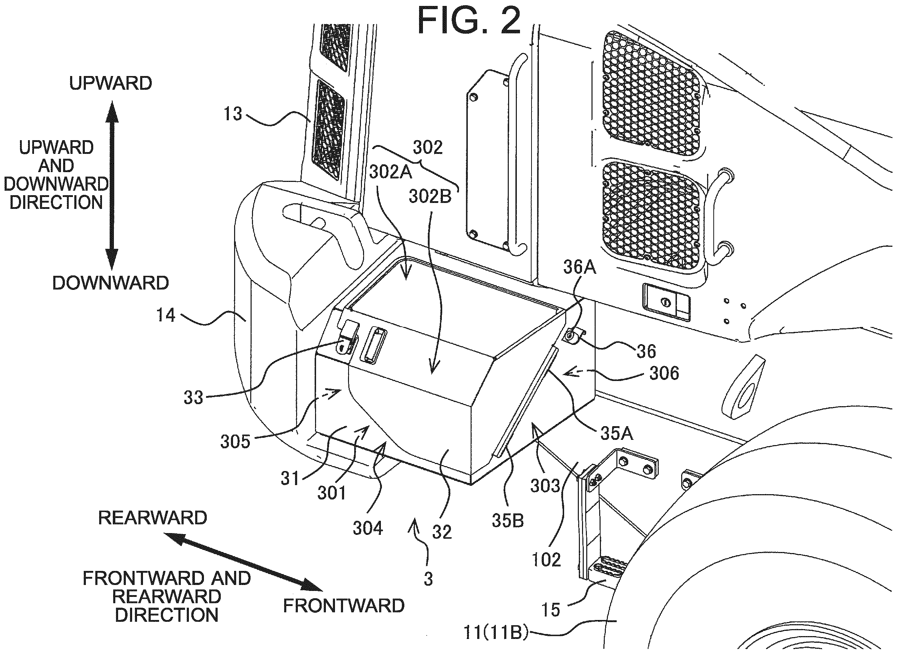

Next, the structure of the housing box 3 will be described with reference to FIG. 2 to FIG. 6.

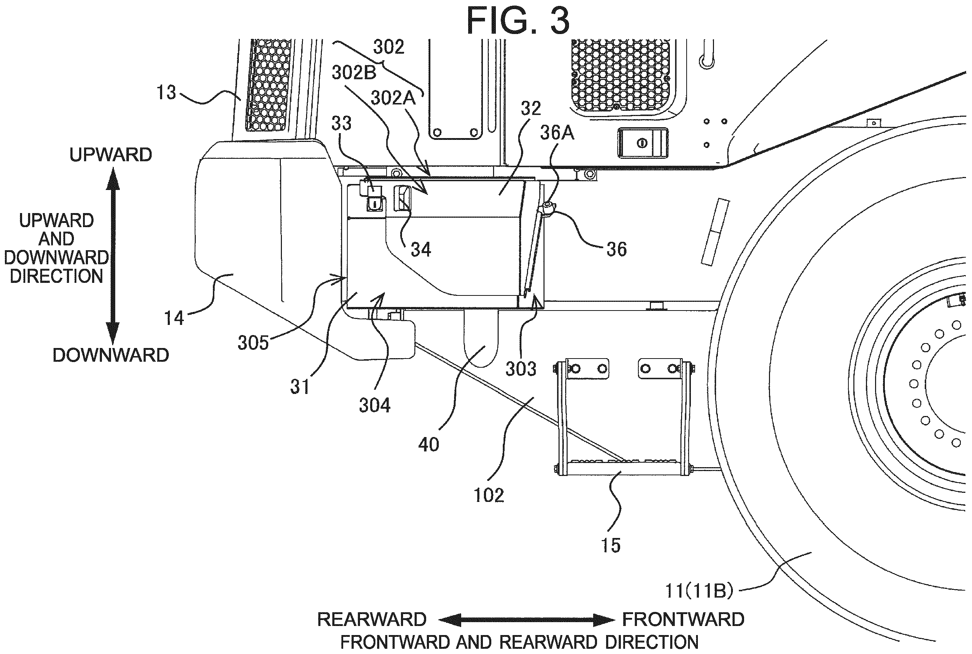

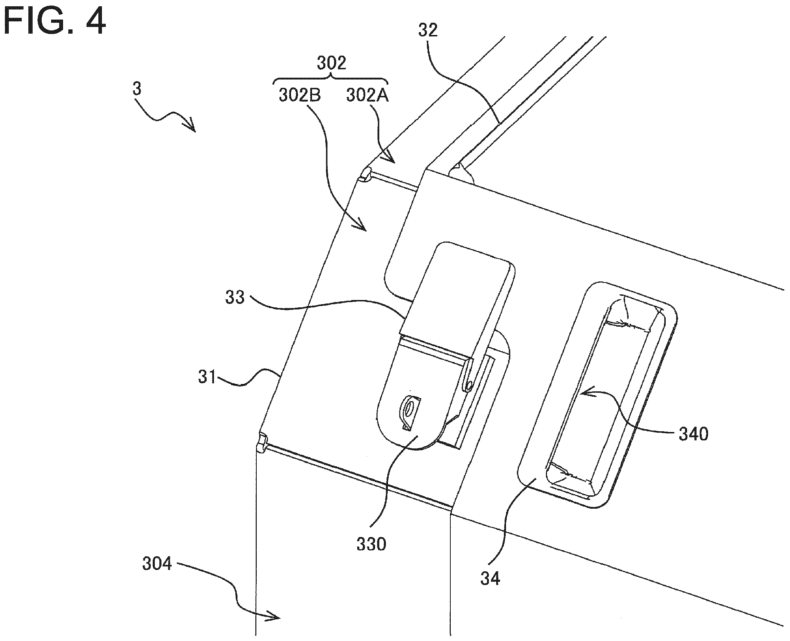

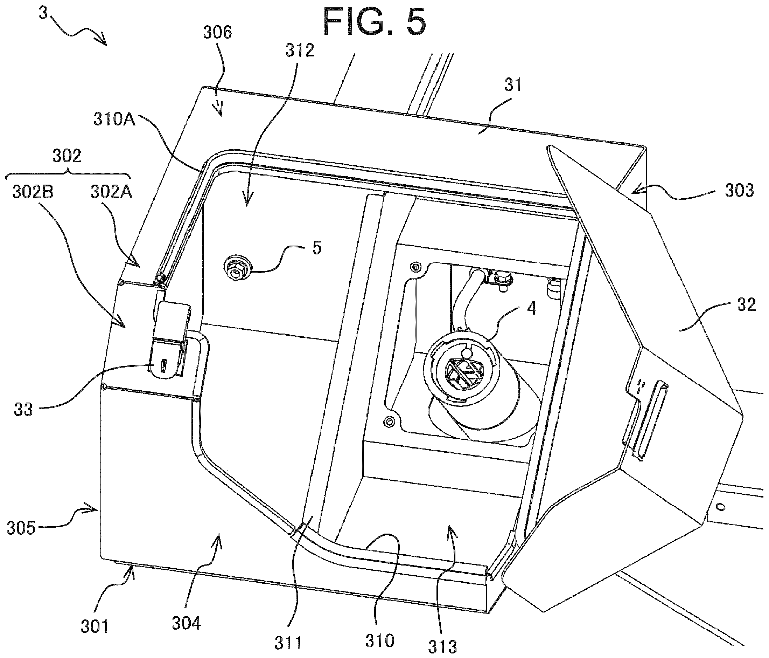

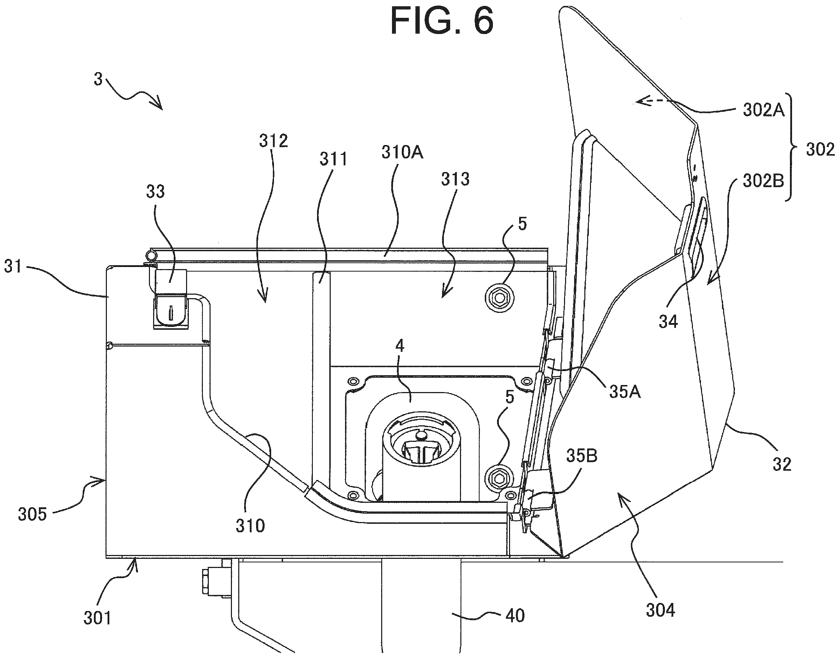

FIG. 2 is a perspective view illustrating the housing box 3 and a peripheral area thereof. FIG. 3 is a side view illustrating the housing box 3 and the peripheral area thereof. FIG. 4 is an enlarged perspective view illustrating exemplified structures of a draw latch 33 and a handle 34. FIG. 5 is a perspective view illustrating the housing box 3 with a cover 32 being fully opened and the inside thereof. FIG. 6 is a side view illustrating the housing box 3 with the cover 32 being fully opened and the inside thereof.

The housing box 3 includes a main body 31 having an opening 310 (see FIG. 5 and FIG. 6) through which the inside thereof is accessible, the cover 32 for covering the opening 310, which is mounted to the main body 31 so as to be openable and closable, the draw latch 33 as a locking tool for locking the cover 32 to the main body 31, and the handle 34 to be used for opening and closing the cover 32.

The housing box 3 is formed into a box shape which is a combination of the main body 31 obtained by bending and processing, for example, a metal material such as an iron plate and the cover 32. Specifically, the housing box 3 includes a bottom surface portion 301 facing a ground surface in contact with the vehicle body, a top surface portion 302 arranged to face the bottom surface portion 301, and first to fourth side surface portions 303 to 306 connecting the bottom surface portion 301 and the top surface portion 302.

The first side surface portion 303 connects the bottom surface portion 301 and the top surface portion 302, on the side facing the rear wheel 11B provided on the right side. The second side surface portion 304 connects the bottom surface portion 301 and the top surface portion 302, on the side exposed to the outside of the vehicle body. That is, the second side surface portion 304 connects the bottom surface portion 301, the top surface portion 302, and the first side surface portion 303 from the lateral side at a position more rearward than the first side surface portion 303.

The third side surface portion 305 connects the bottom surface portion 301 and the top surface portion 302, on the side facing the counterweight 14, in other words, on the side opposite to the first side surface portion 303. The fourth side surface portion 306 connects the bottom surface portion 301 and the top surface portion 302, on the side facing the right side of the rear frame 102, in other words, on the side opposite to the second side surface portion 304.

When the housing box 3 is viewed from above the top surface portion 302, the first to fourth side surface portions 303 to 306 are arranged in the order of the first side surface portion 303, the second side surface portion 304, the third side surface portion 305, and the fourth side surface portion 306 clockwise from the front side (the side facing the rear wheel 11B provided on the right) of the vehicle body. Each of the first to fourth side surface portions 303 to 306 stands from the bottom surface portion 301 in the vertical direction. For example, the second side surface portion 304 connects the bottom surface portion 301 and the top surface portion 302 on the side exposed to the outside of the vehicle body, and also connects the first side surface portion 303 and the third side surface portion 305.

In the present embodiment, the housing box 3 includes the first to fourth side surface portions 303 to 306, however, it does not necessarily have to include the four side surface portions 303 to 306, and for example, the housing box 3 may be formed using a part of the counterweight 14 as the third side surface portion 305 and using a part of the right side of the rear frame 102 as the fourth side surface portion 306, as long as it includes at least the first side surface portion 303 and the second side surface portion 304 among the first to fourth side surface portions 303 to 306.

The top surface portion 302 includes a horizontal region 302A (horizontal surface) which is parallel to the ground surface in contact with the vehicle body, and an inclined region 302B (inclined surface) inclined downward from the horizontal region 302A toward the second side surface portion 304. In the present embodiment, the bottom surface portion 301 is formed parallel to the ground surface in contact with the vehicle body. That is, in the present embodiment, the horizontal region 302A of the top surface portion 302 is parallel to the bottom surface portion 301. Thus, as illustrated in FIG. 2, the housing box 3 is formed in the shape having seven surfaces, in which a rectangular parallelepiped having six surfaces is deformed so as to include the rectangular inclined region 302B between the horizontal region 302A and the second side surface portion 304.

As illustrated in FIG. 2, FIG. 5, and FIG. 6, in the housing box 3, the opening 310 is open over partial regions of the top surface portion 302, the first side surface portion 303, and the second side surface portion 304. That is, the cover 32 extends over the partial regions of the top surface portion 302, the first side surface portion 303, and the second side surface portion 304, respectively.

Thus, in the housing box 3, each of the top surface portion 302, the first side surface portion 303, and the second side surface portion 304 consists of the main body 31 and the cover 32 while each of the bottom surface portion 301, the third side surface portion 305, and the fourth side surface portion 306 consists of the main body 31 only.

Furthermore, as illustrated in FIG. 5 and FIG. 6, in the housing box 3, the main body 31 is fixed to the right side portion of the rear frame 102 via a plurality of bolts 5 from the inside of the fourth side surface portion 306. It should be noted that the housing box 3 is fixed only to the right side portion of the rear frame 102 but is not fixed with respect to the counterweight 14. As illustrated in FIG. 3, a slight space is formed between the third side surface portion 305 and the counterweight 14.

The inside of the housing box 3 is divided into a first space 312 and a second space 313 by a partition wall 311. The partition wall 311 stands from a center region of the bottom surface portion 301 toward the horizontal region 302A of the top surface portion 302. The first space 312 is a room located on the side closer to the counterweight 14, and houses, for example, an onboard tool (not illustrated) to be used in a maintenance work for the wheel loader 1. The second space 313 is a room located on the side closer to the rear wheel 11B, in which a refueling port 4 used in refueling for the engine is installed with being oriented toward the inclined region 302B of the top surface portion 302.

As illustrated in FIG. 3, the fuel supplied from the refueling port 4 is stored in a fuel tank (not illustrated) mounted below the machine room 13 through a refueling pipe 40, which is connected to the refueling port 4, passes through the bottom surface portion 301 of the housing box 3, and extends toward the outside of the housing box 3.

As illustrated in FIG. 2, FIG. 3, FIG. 5, and FIG. 6, on the first side surface portion 303 of the housing box 3, a pair of hinges 35A, 35B for fixing the cover 32 so as to be rotatable with respect to the main body 31 is provided. In the present embodiment, the hinges 35A, 35B are arranged side by side with a predetermined distance being interposed therebetween, along the direction inclined obliquely downward from the fourth side surface portion 306 toward the second side surface portion 304. The direction in which the pair of hinges 35A, 35B is inclined and the direction in which the inclined region 302B of the top surface portion 302 is inclined are substantially parallel to each other.

In the present embodiment, the main body 31 and the cover 32 are coupled with each other by the pair of hinges 35A, 35B, however, the number of hinges to be used for connecting the main body 31 and the cover 32 is not particularly limited.

The cover 32 opens and closes in the forward and rearward direction of the vehicle body while rotating around the pair of hinges 35A, 35B. Specifically, the cover 32 rotates around the pair of hinges 35A, 35B toward the rear wheel 11B provided on the right side, which corresponds to the forward direction of the vehicle body, thereby being opened, and rotates around the pair of hinges 35A, 35B toward the counterweight 14, which corresponds to the rearward direction of the vehicle body, thereby being closed.

As illustrated in FIG. 2 and FIG. 3, the first side surface portion 303 is provided with a stopper member 36 for stopping the rotation of the cover 32 in the opening direction. The stopper member 36 is provided on the side closer to the horizontal region 302A than the hinge 35A placed on the side nearer the horizontal region 302A (upper side) of the top surface portion 302 among the pair of hinges 35A, 35B, and on a portion of the main body 31 which is on the fourth side surface portion 306, and has a contact surface 36A which comes into contact with the cover 32 on the extension of the rotation axis of the pair of hinges 35A, 35B.

However, the housing box 3 does not necessarily have to be provided with the stopper member 36, and the stopper member 36 may not be provided depending on the shape of the cover 32, the content to be housed in the housing box 3, and the like.

The cover 32 rotates in the opening direction, in other words, in the forward direction of the vehicle body, and when the region thereof formed as the first side surface portion 303 comes into contact with the contact surface 36A of the stopper member 36, it stops at that position and is not opened any more, that is, in the fully opened state (states illustrated in FIG. 5 and FIG. 6). The angle of the cover 32 in the fully opened state (the rotation angle of the cover 32 from the closed state) can be appropriately adjusted by changing the position of the contact surface 36A of the stopper member 36 on the first side surface portion 303. However, it is preferable that the cover 32 in the fully opened state does not overlap the refueling port 4 when viewed from the opening direction of the refueling port 4.

As mentioned above, in the housing box 3 according to the present embodiment, not only an object to be housed, such as an onboard tool, is housed but also the refueling port 4 is installed. For example, in such a structure that the cover 32 opens in the right direction of the vehicle body, in other words, in the direction toward an operator who is performing a refueling work while standing at a position facing the second side surface portion 304 of the housing box 3, the cover 32 is interposed between the operator and the refueling port 4, which makes it difficult for the operator to perform the refueling work. Alternatively, for example, in such a structure that the cover 32 opens toward the left direction of the vehicle body, in other words, in the direction toward the machine room 13, the cover 32 easily rotates in the closing direction due to its own weight during the refueling work, which may cause the cover 32 to hit against the operator or refueling equipment.

However, in the present embodiment, the cover 32 opens toward the forward direction of the vehicle body and the stopper member 36 stops the cover 32 at a predetermined rotation angle, which reduces the distance between the operator and the refueling port 4 and thus enables the operator to perform the refueling work easily, as well as can prevent the cover 32 from naturally rotating in the closing direction during the refueling work and thus the cover 32 from hitting against the operator or the refueling equipment.

In the present embodiment, due to the arrangement in which the counterweight 14 is just behind the housing box 3, the cover 32 is formed to open toward the forward direction of the vehicle body, however, depending on the mounting position of the housing box 3 or the like, the cover 32 may be formed to open toward the rearward direction of the vehicle body, and even in this case, the same actions and effects as those described above can be obtained.

Furthermore, in the housing box 3 according to the present embodiment, as described above, the opening 310 is formed to be large over partial regions of the top surface portion 302, the first side surface portion 303, and the second side surface portion 304, respectively, which makes it easier for the operator to perform the refueling work as compare with, for example, the structure in which the opening 310 is formed only on the top surface portion 302 or the second side surface portion 304.

Still further, in the present embodiment, as illustrated in FIG. 5 and FIG. 6, the edge of the opening 310 is provided with a sealing 310A for preventing earth and sand, dust, and the like from entering the housing box 3. Providing the sealing 310A allows the inside of the housing box 3 to be sealed when the cover 32 is closed and locked to the main body 31 by the draw latch 33.

The draw latch 33 and the handle 34 are provided on the inclined region 302B of the top surface portion 302. Specifically, the draw latch 33 is provided over the main body 31 and the cover 32 at an end portion of the inclined region 302B, which is opposite to the first side surface portion 303, in other words, on the side closer to the third side surface portion 305. The handle 34 is provided on the cover 32 at an end portion of the inclined region 302B, which is opposite to the first side surface portion 303, in other words, on the side closer to the third side surface portion 305. The draw latch 33 and the handle 34 are arranged with a predetermined space therebetween along the forward and rearward direction of the vehicle body, and the draw latch 33 is positioned closer to the third side surface portion 305 than the handle 34.

As illustrated in FIG. 4, the draw latch 33 is a widely used member formed with a plurality of components, and has a rectangular shape. In the draw latch 33, one component serving as a member to be locked (not illustrated) is fixed to one end (an end portion on the side closer to the third side surface portion 305) of the cover 32, and another component 330 serving as a locking member is fixed to a portion of the main body 31 which is exposed by cutting out a portion of the one end of the cover 32. In the present embodiment, the draw latch 33 is placed such that its longitudinal direction is along the inclination direction of the inclined region 302B.

As illustrated in FIG. 4, the handle 34 has a shape provided with a recess toward one side so as to allow the operator to insert his or her hand thereinto. In the handle 34, the portion exposed on the inclined region 302B has a rectangular shape, and in the same manner as the draw latch 33, the handle 34 is placed such that its longitudinal direction is along the inclination direction of the inclined region 302B.

In the present embodiment, the handle 34 is provided with an insertion opening 340 through which the operator inserts his or her hand opens toward the side where the rear wheel 11B is placed, and is recessed toward the counterweight 14. Wen the operator who performs the refueling work standing at a position facing the second side surface portion 304 of the housing box 3 tries to open the closed cover 32, he or she inserts the hand into the insertion opening 340 of the handle 34 from the forward direction of the vehicle body toward the rearward direction, and pulls (lifts) the handle 34 upward. This motion of the hand is a motion which is natural to a right-handed operator, and thus makes it easier for him or her to open the cover 32.

Still further, the handle 34 according to the present embodiment is provided at a position away from the pair of hinges 35A, 35B serving as the center of rotation of the cover 32, which can reduce the force applied to the hand of the operator who is opening the closed cover 32 as much as possible, and thus makes it easier for him or her to open the cover 32.

Still further, as described above, in the present embodiment, the direction in which the pair of hinges 35A, 35B inclines and the inclination direction of the inclined region 302B to which the handle 34 is mounted are substantially parallel to each other, which causes the direction of the force to be applied to the cover 32 by pulling (lifting) the cover 32 up in the direction perpendicular to the surface on which the handle 34 is mounted (inclined region 302B) to substantially match the direction in which the cover 32 can rotate. That is, making the direction in which the pair of hinges 35A, 35B is inclined and the inclination direction of the inclined region 302B to which the handle 34 is mounted substantially parallel to each other allows the direction of the force to be applied to the cover 32 to easily match the direction in which the cover 32 can rotate, whereby the operator can open the cover 32 with a small force.

### <Relation between range of mud splash from rear wheel 11B and inclined region 302B>

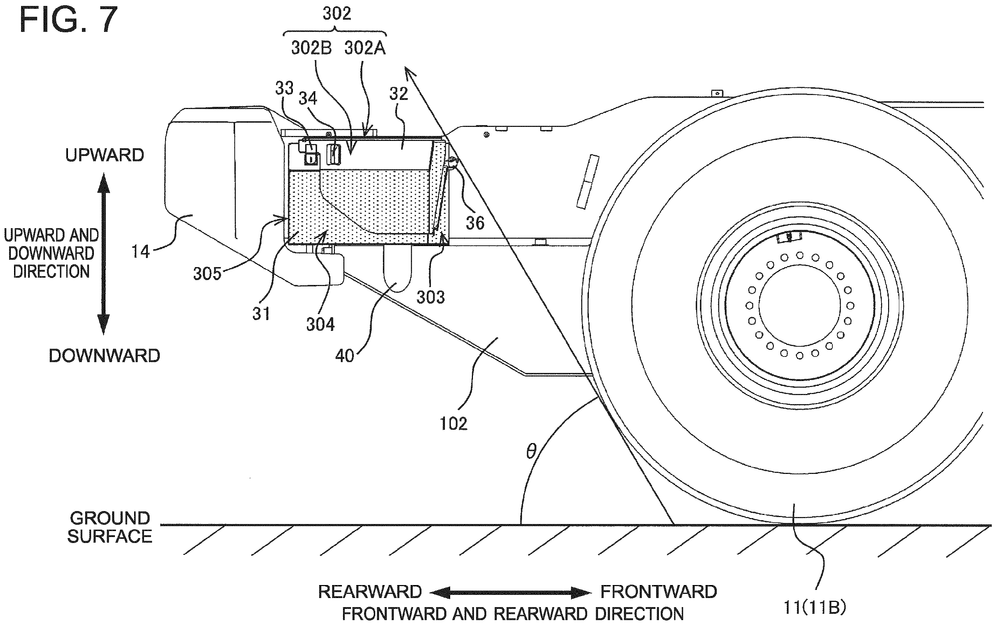

Next, referring to FIG. 7 to FIG. 9, a relation between a range of mud splash from the rear wheel 11B provided on the right side and the inclined region 302B of the top surface portion 302 of the housing box 3 will be described.

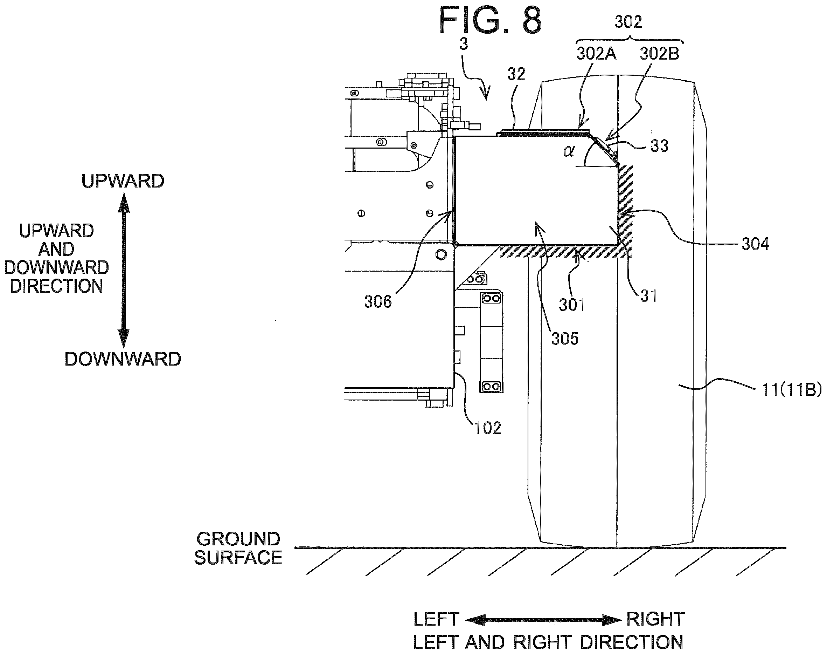

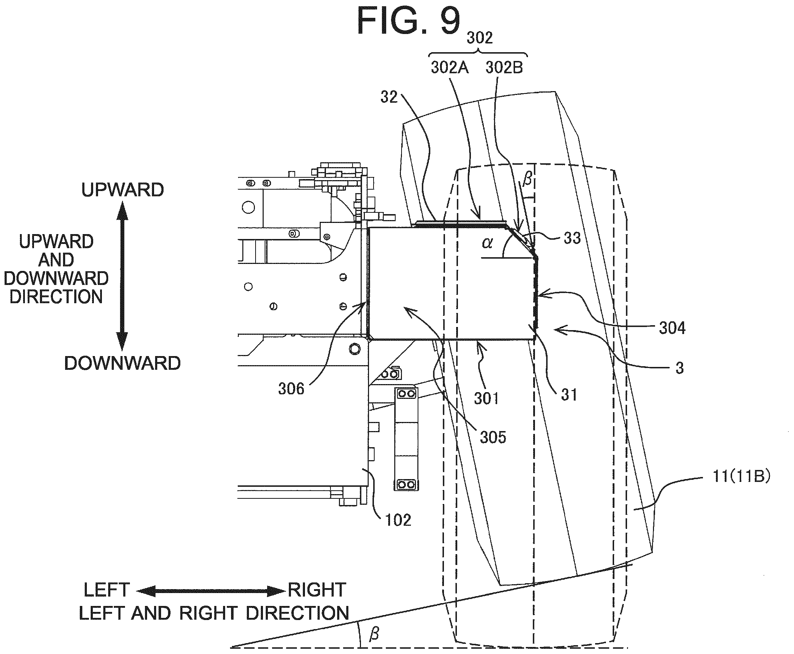

FIG. 7 is a diagram for explaining a relation between an example of a range of mud splash from the rear wheel 11B and a portion of the housing box 3 to which the mud easily adheres. FIG. 8 illustrates an example of a positional relation between the housing box 3 and the rear wheel 11B when viewed from the rear side of the vehicle body. FIG. 9 illustrates a positional relation between the housing box 3 and the rear wheel 11B when the rear wheel 11B swings leftward in FIG. 8.

For example, in the case where the wheel loader 1 travels forward on an unpaved road, the mud splashes from each of the wheels 11 in the obliquely upward direction toward the rear. As illustrated in FIG. 7, the range of the mud splash from the rear wheel 11B provided on the right side corresponds to an angle θ (mud splash angle θ) between the ground surface in contact with the vehicle body and the line tangent to the rear wheel 11B which intersects the ground surface.

The housing box 3 is arranged behind the rear wheel 11B, which causes the mud to easily adhere to the area included in the range of the mud splash angle θ**.** Specifically, as illustrated with the dots in FIG. 7 and by hatching in FIG. 8, the mud splashing from the rear wheel 11B easily adheres to the bottom surface portion 301, the first side surface portion 303, and the second side surface portion 304. This is because the bottom surface portion 301, the first side surface portion 303, and the second side surface portion 304 all face the direction in which the mud splashes.

On the other hand, in the upward and downward direction of the vehicle body, between the top surface portion 302 and the ground surface in contact with the rear wheel 11B provided on the right side, the bottom surface portion 301, the first side surface portion 303, and the second side surface portion 304 are positioned, and thus the top surface portion 302 does not face the direction in which the mud splashes. This makes the mud be less likely adhere to the top surface portion 302 than each of the bottom surface portion 301, the first side surface portion 303, and the second side surface portion 304. As a result, the mud splashing from the rear wheel 11B does not easily adhere to the draw latch 33 and the handle 34 provided on the top surface portion 302.

Suppose that the draw latch 33 and the handle 34 are provided on the second side surface portion 304, the mud splashing from the rear wheel 11B may adhere to them and then be dried and hardened, which prevents the cover 32 from being opened. However, in the housing box 3, the draw latch 33 and the handle 34 are provided on the top surface portion 302 to which the mud splashing from the rear wheel 11B is less likely to adhere, and accordingly, there is less chance that the mud adhered thereto is dried and hardened and thus the cover 32 cannot be easily opened.

Furthermore, in the same manner as the mud splashing from the rear wheel 11B, a stone flying from the rear wheel 11B also hardly hits against the top surface portion 302, which can prevent the draw latch 33 and the handle 34 from being damaged due to the flying stone.

Still further, in the present embodiment, as illustrated in FIG. 7, the draw latch 33 and the handle 34 are placed at the end portion of the inclined region 302B which is on the side closer to the counterweight 14 and away from the rear wheel 11B, and this can reduce the influence of the mud splashing from the rear wheel 11B more as compared with the arrangement in which they are at the end portion on the side closer to the rear wheel 11B.

On the other hand, in a worksite in which the wheel loader 1 is operated, the sand, dust, and the like easily fly and are easily deposited on the horizontal region 302A of the top surface portion 302. However, in the inclined region 302B, even if the sand, dust, and the like are adhered thereto, they easily slip downward, and this suppresses the sand, dust, and the like from being deposited on the draw latch 33 and the handle 34.

As described above, in the housing box 3, the draw latch 33 and the handle 34 are provided on the inclined region 302B of the top surface portion 302, and thus the mud splashing from the rear wheel 11B hardly adheres thereto and also the sand, dust, and the like are hardly deposited thereon. This can improve the workability in opening and closing the cover 32.

In some cases, the horizontal region 302A, which serves as the top surface of the housing box 3 mounted behind the rear wheel 11B as in the present embodiment, may be used as a place to stand where an operator performs a maintenance work from above, such as a work for supplying water to a radiator the vehicle body. Accordingly, in the present embodiment, the draw latch 33 and the handle 34 are not arranged on the horizontal region 302A which is used as the place to stand for the operator, which allows the operator to perform the maintenance work without caring an obstacle at the foot. This can secure the workability during the maintenance work and also suppress the damages in the draw latch 33 and the handle 34 which may be caused by the operator who steps thereon during the maintenance work.

Here, as illustrated in FIG. 8, the inclined region 302B may be formed such that an inclination angle α with respect to the ground surface in contact with the vehicle body is at least more than 0° (corresponding to the horizontal region 302A) and less than 90° (corresponding to the second side surface portion 304) (0°<α<90°).

However, in the case where the inclination angle α is close to 0°, in other words, a slope tanα of the inclined region 302B is gentle, the sand, dust, and the like adhered to the inclined region 302B is less likely to fall. Accordingly, in the present embodiment, the slope tan α of the inclined region 302B is set to be more than the minimum slope of 3/10 (tanα>3/10), which does not allow the snow to be deposited on a roof of a house. That is, the inclination angle α is set to be more than an angle which is a slope of 3/10 (=about 16°).

Furthermore, as illustrated in FIG. 9, in the wheel loader 1, axles to which the wheels 11 are mounted, respectively, swing up and down due to the unevenness of the ground surface in contact with the vehicle body, which may cause the inclined region 302B, if having the inclination angle α being close to 90°, to be positioned on the direction in which the mud splashes when the rear wheel 11B swings. Accordingly, in the present embodiment, the inclination angle α of the inclined region 302B is set to be less than an angle obtained by subtracting a swing angle β of the rear wheel 11B from 90° (α<90°-β). For example, in the case where the swing angle β is 10°, the inclination angle α is set to be less than 80°.

In the present embodiment, the housing box 3 is mounted to a right side portion of the vehicle body, and thus, as illustrated in FIG. 9, the case where an upper area of the wheel 11 (rear wheel 11B) provided on the right side swings leftward (the case where the rear wheel 11B provided on the right side gets on the raised ground) is considered, however, if the housing box 3 is mounted to a left side portion of the vehicle body, the case where an upper area of the wheel 11 on the left side (rear wheel 11B) swings toward rightward (the case where the rear wheel 11B provided on the left side gets onto the raised ground) would be considered. In the latter case as well, the inclination angle α of the inclined region 302B is preferably set to be less than an angle obtained by subtracting the swing angle β of the wheel 11 from 90°.

### <Modification>

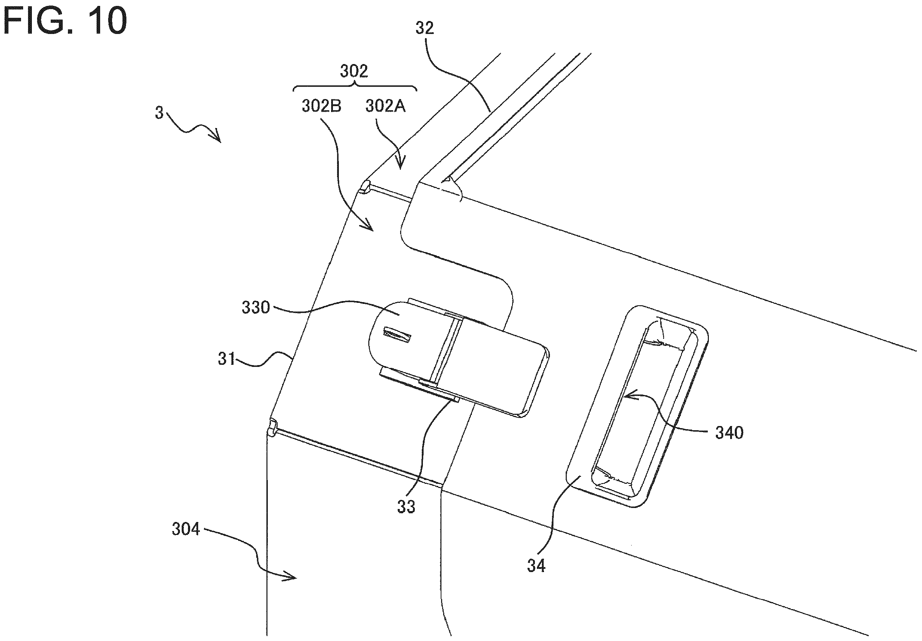

Next, first to third modifications relating to the orientations of mounting the draw latch 33 and the handle 34 will be described with reference to FIG. 10 to FIG. 12. In FIG. 10 to FIG. 12, the components common to those described for the wheel loader 1 according to the embodiment described above are provided with the same reference signs, and the explanation therefor will be omitted.

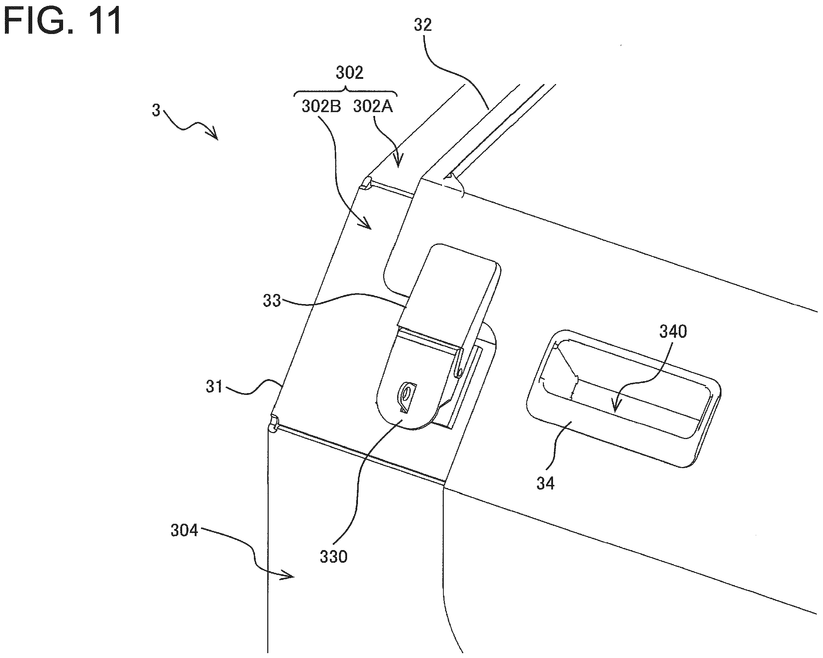

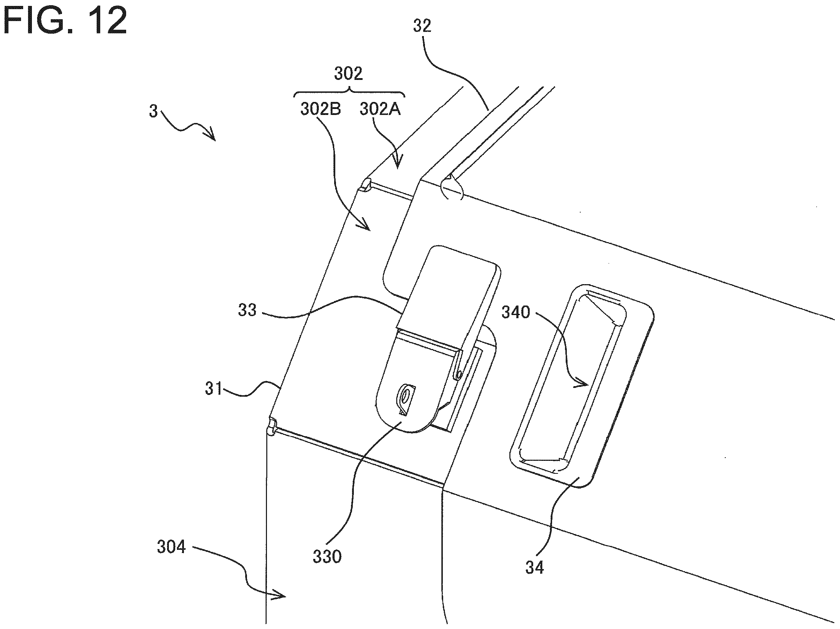

FIG. 10 illustrate the case where an orientation of mounting the draw latch 33 illustrated in FIG. 4 is different as the first modification. FIG. 11 illustrates the case where an orientation of mounting the handle 34 illustrated in FIG. 4 is different as the second modification. FIG. 12 illustrates the further case where an orientation of mounting the handle 34 illustrated in FIG. 4 is different as the third modification.

In the first modification illustrated in FIG. 10, the orientation in which the draw latch 33 is mounted is different from the orientation in which the draw latch 33 is mounted in the embodiment described above.

Specifically, in the draw latch 33 according to the first modification, the short-side direction thereof is located along the inclination direction of the inclined region 302B, in other words, the longitudinal direction thereof is located along the forward and rearward direction of the vehicle body. That is, suppose that the orientation in which the draw latch 33 is mounted in the embodiment described above is defined as a vertical orientation, the orientation in which the draw latch 33 is mounted in the first modification can be defined as a horizontal orientation.

Thus, mounting the draw latch 33 in the horizontal orientation reduces the projected area toward the second side surface portion 304 with respect to the direction in which the mud splashes from the rear wheel 11B as compared with the case of mounting it in the vertical direction. This can further reduce the influence of the mud splash from the rear wheel 11B on the draw latch 33.

In the second modification illustrated in FIG. 11, the orientation in which the handle 34 is mounted is different from the orientation in which the handle 34 is mounted in the embodiment described above.

Specifically, in the handle 34 according to the second modification, the short-side direction thereof is located along the inclination direction of the inclined region 302B, in other words, the longitudinal direction thereof is located along the forward and rearward direction of the vehicle body. That is, suppose that the orientation in which the handle 34 is mounted in the embodiment described above is defined as a vertical orientation, the orientation in which the handle 34 is mounted in the second modification can be defined as a horizontal orientation. Furthermore, in the handle 34 according to the second modification, the insertion opening 340 opens toward the horizontal region 302A and is recessed toward the second side surface portion 304.

Thus, mounting the handle 34 in the horizontal orientation reduces the projected area toward the second side surface portion 304 with respect to the direction in which the mud splashes from the rear wheel 11B as compared with the case of mounting it in the vertical direction. This can further reduce the influence of the mud splash from the rear wheel 11B on the handle 34.

In the third modification illustrated in FIG. 12, the orientation in which the handle 34 is mounted is different from the orientation in which the handle 34 is mounted in the embodiment described above and that in the second modification.

Specifically, the handle 34 according to the third modification is located such that its longitudinal direction is along the inclination direction of the inclined region 302B in the same manner as the handle 34 according to the embodiment described above, however, the insertion opening 340 opens toward the counterweight 14 and is recessed toward the rear wheel 11B provided on the right side. That is, in the handle 34 according to the third modification, the opening direction of the insertion opening 340 is opposite to the opening direction of the insertion opening 340 of the handle 34 according to the embodiment described above.

Thus, forming the opening direction of the insertion opening 340 of the handle 34 to be along the direction in which the mud splashes from the rear wheel 11B can make it more difficult for the splashing mud to enter the handle 34 as compared with the handle 34 according to the embodiment described above.

Hereinabove, the embodiment of the present invention has been described. The present invention is not limited to the embodiment described above, and includes various modifications. For example, the embodiment described above has been described in detail for the purpose of making the present invention easy to be understood, but is not necessarily limited to the one having all the features described above. In addition, a part of the configuration of the present embodiment can be replaced with a configuration of other embodiments, and a configuration of other embodiments can be added to the configuration of the present embodiment. Furthermore, for a part of the configuration of the present embodiment, other configurations may be added, or deletion or replacement may be performed.

For example, in the embodiment described above, the wheel loader 1 has been exemplified as an aspect of a work vehicle, however, the present invention is not limited thereto as long as it is a wheeled work vehicle with the housing box 3 which is mounted to a side portion of the vehicle body.

Furthermore, in the embodiment described above, the draw latch 33 has been exemplified as an aspect of a locking tool for locking the cover 32 to the main body 31, however, the present invention is not limited thereto, and any type and means can be employed as long as it is capable of locking the cover 32 to the main body 31.

Still further, in the embodiment described above, an object to be stored in the housing box 3 includes the refueling port 4, however, the present invention is not limited thereto, and the object to be stored may be, for example, only an onboard tool or include a reducing agent tank, which means it is not particularly limited.

Still further, in the embodiment described above, the cover 32 is structured to open toward the forward direction of the vehicle body around the pair of hinges 35A, 35B provided on the first side surface portion 303, however, the present invention is not limited thereto, and the opening and closing direction of the cover 32 can be modified as appropriate depending on the place on which the housing box 3 is to be mounted, an object to be stored, and the like.

Still further, in the embodiment described above, the housing box 3 is provided with the handle 34 for opening and closing the cover 32, however, the present invention is not limited thereto, and the handle 34 is not necessarily provided as long as an operator can hold the cover 32 to open and close it in a direct manner.

Still further, as illustrated in the embodiment and modifications described above, the orientations in which the draw latch 33 and the handle 34 are mounted are not particularly limited as long as each of the draw latch 33 and the handle 34 is mounted to at least the inclined region 302B of the top surface portion 302.

### REFERENCE SIGNS LIST

1: wheel loader (work vehicle)
3: housing box (housing body)
4: refueling port
11, 11A: front wheel (wheel)
11, 11B: rear wheel (wheel)
31: main body
32: cover
33: draw latch (locking tool)
34: handle
35A, 35B: hinge
36: stopper member
36A: contact surface
101: front frame (vehicle body)
102: rear frame (vehicle body)
301: bottom surface portion
302: top surface portion
302A: horizontal region
302B: inclined region
303: first side surface portion
304: second side surface portion
310: opening
340: insertion opening
α: inclination angle
β: swing angle

## Claims

1. A work vehicle comprising:
a vehicle body;
a plurality of wheels provided on the vehicle body; and
a housing body mounted to a side portion of the vehicle body and behind one of the plurality of wheels,
the housing body including:
a main body provided with an opening through which an inside of the main body is accessible;
a cover for covering the opening, which is mounted to the main body so as to be openable and closable; and
a locking tool for locking the cover to the main body,
wherein
the housing body is formed into a box shape including:
a bottom surface portion;
a top surface portion arranged to face the bottom surface portion;
a first side surface portion connecting the bottom surface portion and the top surface portion on a side facing the one of the wheels; and
a second side surface portion connecting the bottom surface portion, the top surface portion, and the first side surface portion from a lateral side at a position more rearward than the first side surface portion,
the top surface portion consists of the main body and the cover,
the top surface potion includes:
a horizontal region parallel to a ground surface in contact with the vehicle body; and
an inclined region inclined downward from the horizontal region toward the second side surface portion, and
the locking tool is provided on the inclined region of the top surface portion.

2. The work vehicle according to claim 1, wherein
the housing body further includes a handle for opening and closing the cover, and
the handle is provided on the cover at the inclined region of the top surface portion thereof.

3. The work vehicle according to claim 2, wherein
each of the locking tool and the handle is formed in a rectangular shape, and placed such that a longitudinal direction thereof is along an inclination direction of the inclined region.

4. The work vehicle according to claim 1, wherein
in the housing body, an inclination angle of the inclined region of the top surface portion with respect to the ground surface is set to be more than an angle which is a slope of 3/10, and also less than an angle obtained by subtracting a swing angle of the one of the wheels from 90 degrees.

5. The work vehicle according to claim 1, wherein
inside the housing body, a fueling port for filling a fuel is installed.

6. The work vehicle according to claim 1, wherein
each of the first side surface portion and the second side surface portion consists of the main body and the cover,
the housing body is provided with a hinge for fixing the cover with respect to the main body on the first side surface portion so as to be rotatable,
the cover opens and closes with rotating around the hinge in a forward and rearward direction of the vehicle body, and
in the inclined region, the locking tool is located at an end portion which is on a side opposite to a side closer to the first side surface portion.
